(19) Europäisches Patentamt
European Patent Office
Office européen des brevets

(11) **EP 4 625 915 A1**

(12) **EUROPEAN PATENT APPLICATION**

(43) Date of publication:
**01.10.2025 Bulletin 2025/40**

(21) Application number: **25167015.4**

(22) Date of filing: **28.03.2025**

(51) International Patent Classification (IPC):
**H04L 27/02** (2006.01)   **H04L 27/26** (2006.01)
**H04W 52/02** (2009.01)

(52) Cooperative Patent Classification (CPC):
**H04L 27/2602; H04L 27/02; H04L 27/2697; H04W 52/0229**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 GB 202404446**

(71) Applicant: **Nokia Technologies Oy**
**02610 Espoo (FI)**

(72) Inventors:
• **VENKATRAMAN, Ganesh**
  **90540 Oulu (FI)**
• **KAIKKONEN, Jorma Johannes**
  **90800 Oulu (FI)**
• **KINNUNEN, Pasi Eino Tapio**
  **90240 Oulu (FI)**
• **SETHI, Alok**
  **90620 Oulu (FI)**
• **KNUDSEN, Knud**
  **9440 Aabybro (DK)**
• **BHATOOLAUL, David**
  **Swindon, SN25 2HD (GB)**

(74) Representative: **Script Intellectual Property LLP**
**Suite J, Anchor House**
**School Close**
**Chandlers Ford**
**Eastleigh, Hampshire SO53 4DY (GB)**

(54) **MODULATION AND CODING USING OOK TO FORM AN LP-WUS PAYLOAD FOR SEQUENCE-BASED DETECTORS THAT CAN PROVIDE A TIME DOMAIN EFFICIENCY IMPROVEMENT**

(57) A UE receives a WUS payload having a modulated overlay sequence overlaid on encoding for OOK, where the modulated overlay sequence is formed from the overlay sequence modulated with symbols from a constellation, to map information bits to the symbols. The information bits are at least part of the WUS payload. The UE determines a constant phase error corresponding to ON durations of the OOK and that separates received symbols in phase. The UE determines, using at least the constant phase error, individual received symbols corresponding to individual ON durations of the OOK. The UE determines the symbols that were used to modulate the overlay sequence based on the individual received symbols. The UE determines the information bits corresponding to the determined symbols, and determines at least one result based on the information bits.

Receive, by a UE (e.g., having a wake-up receiver that is part of a low power wake up radio), a wake-up signal payload having a modulated overlay sequence overlaid on encoding for on-off keying, where the modulated overlay sequence is formed from the overlay sequence modulated with symbols from a constellation, for mapping information bits to the symbols, where the information bits are at least part of the wake-up signal payload — 410

Decode, by the UE (e.g., wake-up receiver), the symbols to determine the information bits — 420

Determine, by the UE (e.g., wake-up receiver), at least one result based on the information bits (e.g., waking up or not waking up the main radio, monitoring for paging or not) — 425

Communicate or do not communicate by the user equipment with the access node based on the at least one result (e.g., whether or not the main radio is awake, whether monitoring paging indicates the UE is paged) — 430

**FIG. 4**

**Description**

TECHNICAL FIELD

Examples of embodiments herein relate generally to wireless communications and, more specifically, relate to wake-up signals.

BACKGROUND

In wireless communications, power usage is important for devices that rely on batteries. One piece of hardware that can be put into low power mode, including turning off, is a main radio. Placing the main radio into low power mode, however, means the device cannot receive any signals, including signals such as paging signals that are critical so the device knows that data is waiting for it.

To help this, some devices use an LR (LP-WUR, low power wake up radio), which combines a main radio and an ultra-low power wake-up receiver. The main radio can be placed into a low power mode, while the ultra-low power wake-up receiver listens for a wake-up signal (WUS). If the ultra-low power wake-up receiver determines it has received a WUS indicating the main radio should be woken up, the ultra-low power wake-up receiver can trigger the main radio to wake up.

The WUS can contain different forms, but one form that is used involves on-off keying (OOK), which is a type of amplitude shift keying because it relies on amplitude of the signals (e.g., some amplitude while in an ON duration, and no amplitude while in an OFF duration). One type of OOK is Manchester coding (MC).

While the WUS and the corresponding power saving modes are beneficial, these could also be improved.

BRIEF SUMMARY

This section is intended to include examples and is not intended to be limiting.

In an exemplary embodiment, a method is disclosed that includes receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining a constant phase error corresponding to ON durations of the on-off keying and that separates received symbols in phase; determining, using at least the constant phase error, individual received symbols corresponding to individual ON durations of the on-off keying; determining the symbols that were used to modulate the overlay sequence based on the individual received symbols; determining the information bits corresponding to the determined symbols; and determining at least one result based on the information bits. The method may be performed by a user equipment.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining a constant phase error corresponding to ON durations of the on-off keying and that separates received symbols in phase; determining, using at least the constant phase error, individual received symbols corresponding to individual ON durations of the on-off keying; determining the symbols that were used to modulate the overlay sequence based on the individual received symbols; determining the information bits corresponding to the determined symbols; and determining at least one result based on the information bits. The apparatus may be, or comprise, a user equipment.

The apparatus according to the above paragraph, wherein: determining the constant phase error comprises: performing correlation using the overlay sequence from a first ON duration of the on-off keying to determine a received sequence having a plurality of indexes corresponding to individual samples; choosing an index, from the plurality of indexes, having a maximum value from the received sequence; using a sample corresponding to the index to determine a phase; using at least the phase to determine a first received symbol from the first ON duration; decoding information in a second ON duration of the on-off keying to determine the constant phase error; determining, using at least the constant phase error, the individual received symbols comprises determining, using at least the constant phase error, the individual received symbols for third and subsequent ON durations. The apparatus according this paragraph, wherein the first received symbol is $x_0$ having M bits, $2^M$ ON durations are needed to estimate a value of $x_0$ and a further $2^M$ bits are needed to estimate the constant phase.

The apparatus according to the previous paragraph, wherein the decoding information in the second ON duration uses a channel $h$ in equations for the first received symbol and a second received symbol in the second ON duration to determine a scaling factor based on $h \times h^* \approx |h|^2$, and the scaling factor is used in the decoding information.

The apparatus as above, wherein: a first ON duration of the on-off keying comprises a pilot symbol; and determining the constant phase error comprises determining the constant phase error based on the pilot symbol.

The apparatus as above, wherein the symbols from the constellation comprise first symbols, wherein the wake-up signal payload is received during ON durations of the on-off keying, wherein the second symbols modulating the overlay sequence on symbol $\{0, ..., m\}$ are given as the following: $x_0 = s_0$, $x_1 = s_0 \times s_1, \ldots, x_m = \prod_{i=0}^{m} s_i$, where $x_0, x_1, \ldots$, and $x_m$ are second symbols and $s_0, s_1, \ldots$, and $s_m$ are first symbols, and an ON duration sequence transmitted at symbol m is given by $\{z\} \times x_m$, where $\{z\}$ is the overlay sequence.

The apparatus as above, wherein an individual modulated overlay sequence is transmitted with a repetition factor of two. The apparatus as above, wherein the encoding for on-off keying comprises Manchester encoding where a first value of a bit is encoded using an ON duration, comprising part of the modulated overlay sequence, that precedes an OFF duration that is empty, and a second value of the bit is encoded using the OFF duration that is empty and that precedes the ON duration, comprising another part of the modulated overlay sequence.

The apparatus as above, wherein the constellation is from a family of phase modulation schemes. The apparatus as above, wherein the encoding for on-off keying encodes a set of bits and the symbols used to modulate the overlay sequence encode a same set of bits.

An exemplary computer program product includes a computer-readable storage medium bearing instructions that, when executed by an apparatus, cause the apparatus to perform at least the following: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining a constant phase error corresponding to ON durations of the on-off keying and that separates received symbols in phase; determining, using at least the constant phase error, individual received symbols corresponding to individual ON durations of the on-off keying; determining the symbols that were used to modulate the overlay sequence based on the individual received symbols; determining the information bits corresponding to the determined symbols; and determining at least one result based on the information bits. The computer program product may be implemented in a user equipment.

In another exemplary embodiment, an apparatus comprises means for: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining, by the user equipment, a constant phase error corresponding to ON durations of the on-off keying and that separates received symbols in phase; determining, using at least the constant phase error, individual received symbols corresponding to individual ON durations of the on-off keying; determining, the symbols that were used to modulate the overlay sequence based on the individual received symbols; determining, the information bits corresponding to the determined symbols; and determining at least one result based on the information bits. The apparatus may be, or comprise, a user equipment.

In an exemplary embodiment, a method is disclosed that includes for mapping information bits to the symbols, where the information bits are at least part of a wake-up signal payload; overlaying, by the access node, the modulated overlay sequence on encoding for on-off keying to form the wake-up signal payload; and transmitting, by the access node to a user equipment, the wake-up signal payload.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: for mapping information bits to the symbols, where the information bits are at least part of a wake-up signal payload; overlaying the modulated overlay sequence on encoding for on-off keying to form the wake-up signal payload; and transmitting, to a user equipment, the wake-up signal payload.

An exemplary computer program product includes a computer-readable storage medium bearing instructions that, when executed by an apparatus, cause the apparatus to perform at least the following: for mapping information bits to the symbols, where the information bits are at least part of a wake-up signal payload; overlaying the modulated overlay sequence on encoding for on-off keying to form the wake-up signal payload; and transmitting, to a user equipment, the wake-up signal payload.

In another exemplary embodiment, an apparatus comprises means for performing: for mapping information bits to the symbols, where the information bits are at least part of a wake-up signal payload; overlaying the modulated overlay sequence on encoding for on-off keying to form the wake-up signal payload; and transmitting, to a user equipment, the wake-up signal payload.

In an exemplary embodiment, a method is disclosed that includes receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; decoding, by the user equipment, the symbols to determine the information bits; and determining, by the user equipment, at least one result based on the information bits.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; decoding the symbols to determine the information bits; and determining at least one result based on the information bits.

An exemplary computer program product includes a computer-readable storage medium bearing instructions that, when executed by an apparatus, cause the apparatus to perform at least the following: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; decoding the symbols to determine the information bits; and determining at least one result based on the information bits.

In another exemplary embodiment, an apparatus comprises means for: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; decoding the symbols to determine the information bits; and determining at least one result based on the information bits.

BRIEF DESCRIPTION OF THE DRAWINGS

The accompanying drawings use reference numerals, where the same reference numerals may be used to refer to like parts throughout, but parts having the same reference numeral can differ in operation and components. In the attached drawings:

FIG. 1A illustrates UE operations with an LR (LP-WUR, low power wake up radio) in an off state;
FIG. 1B illustrates UE operations with the LR in an on state;
FIG. 2 illustrates overlay sequence types (e.g., sequence-based information);
FIG. 3 is a flow diagram performed by an access node for using modulation and coding using OOK to form an LP-WUS payload for sequence-based detectors;
FIG. 4 is a flow diagram performed by a user equipment for decoding and using an LP-WUS payload formed using modulation and coding using OOK;
FIG. 5A illustrates information bits conveyed via MC (Manchester) encoding for OOK-based ED (envelope detection) receivers, for pilot-free transmission;
FIG. 5B illustrates information bits conveyed via MC encoding for OOK-based ED receivers, for pilot-assisted transmission;
FIG. 6 illustrates two sequences in an ON duration to carry more bits; and
FIG. 7 is a block diagram of one possible and non-limiting exemplary system in which the exemplary embodiments may be practiced.

DETAILED DESCRIPTION OF THE DRAWINGS

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the examples.

When more than one drawing reference numeral, word, or acronym is used within this description with "/", and in general as used within this description, the "/" may be interpreted as "or", "and", or "both". As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that capital and lowercase words or phrases are considered to be the same herein. For instance, the words Slice and slice are the same, as are the phrases Network Repository Function and network repository function.

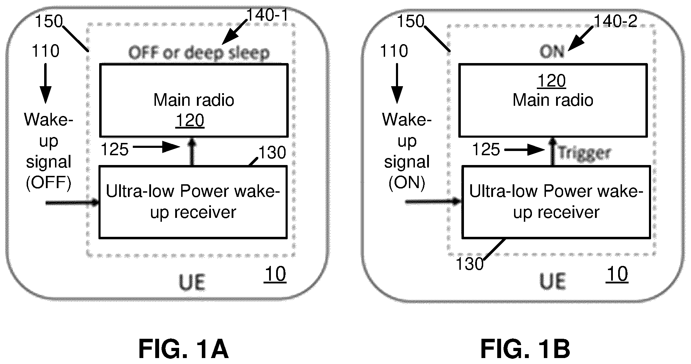

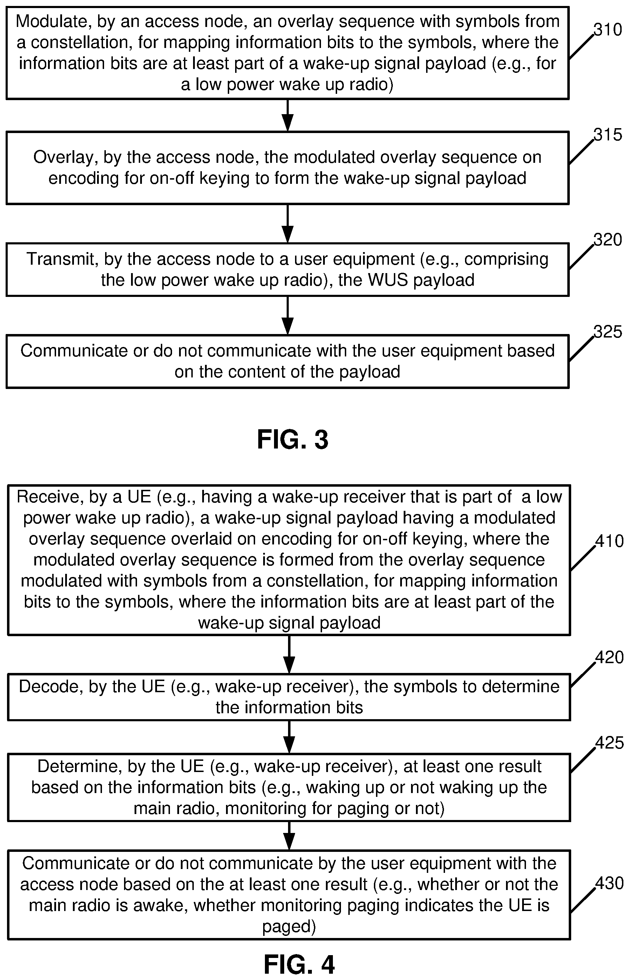

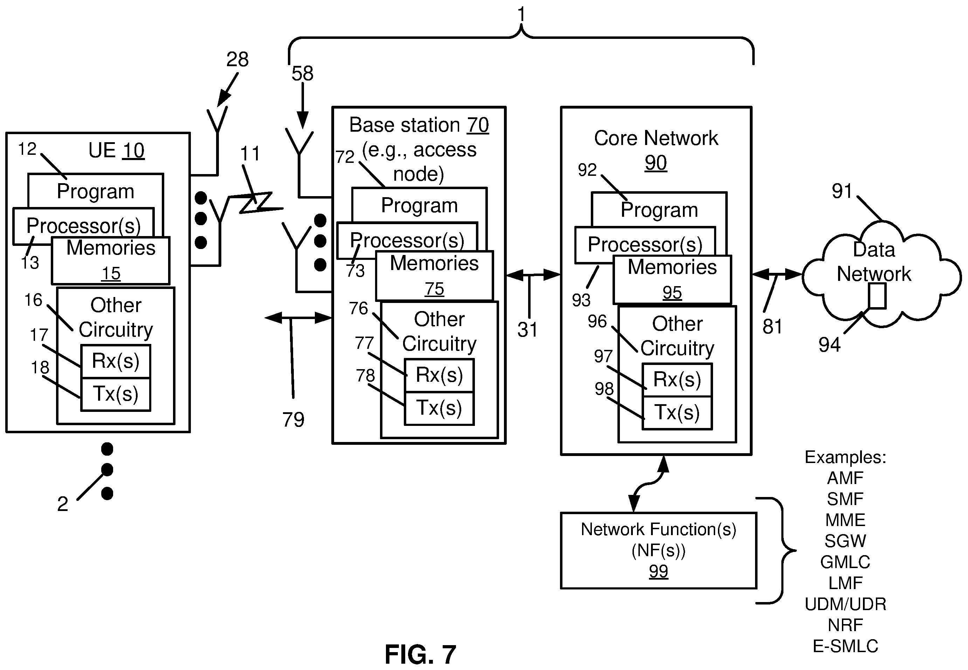

Any flow diagram (such as FIGS. 3 and 4) or signaling diagram herein is considered to be a logic flow diagram, and illustrates the operation of an exemplary method, results of execution of computer program instructions embodied on a computer readable memory, functions performed by logic implemented in hardware, and/or interconnected means for performing functions in accordance with an exemplary embodiment. Block diagrams (such as FIGS. 1A, 1B, and 7) also illustrate the operation of an exemplary method, results of execution of computer program instructions embodied on a computer readable memory, functions performed by logic implemented in hardware, and/or interconnected means for performing functions in accordance with an exemplary embodiment. For methods, flow diagrams, and signaling diagrams, the orders of method steps, blocks in the flow, or signaling are not critical and instead are examples.

Before proceeding with description of the examples presented herein, information about pertinent technical areas is described. There is a study item (RP-213645, Vivo, "New SID: Study on low-power Wake-up Signal and Receiver for NR", 3GPP (third generation partnership project) TSG (Technical service group) RAN (Radio access network) meeting #94e, Electronic Meeting, December 6 - 17, 2021) on low-power Wake-up Signal (WUS) and Receiver for NR (new radio). The study, which is now complete in RAN1, considered the usage of a separate low-power wake-up receiver at the UE, and evaluated how that can reduce the UE's power consumption. The intention is that the main radio of the UE can be in a sleep mode (or even powered off) for power saving and be activated only upon the reception of the wake-up signal from the network. Basically, the network triggers the UE to wake-up exactly when needed in an event-driven manner, by transmitting a special WUS to the UE, which is monitored by the dedicated low-power WUS receiver at the UE. When a UE receives the WUS, the WUS receiver can trigger the wake-up of the ordinary NR transceiver and communication can start. Thus, the ultra-low power receiver wakes up the main radio and otherwise, the main radio is OFF or kept in a deep sleep mode.

Refer to FIG. 1A, which illustrates UE operations with an LR (LP-WUR, low power wake up radio) 150 in an off state. The LR 150 includes a main radio 120 and an ultra-low power wake-up receiver 130. The UE 10 receives a WUS 110 that has an off signal, and the ultra-low power wake-up receiver 130 does not send a signal over the link 125. The main radio 120 is then in an off state 140-1, also referred to as a deep sleep state. In FIG. 1B, the WUS 110 has an ON signal, the ultra-lower power wake-up receiver 130 receives this and outputs a trigger on the link 125. This causes the main radio 120 to go to the ON state 140-2. FIGS. 1A and 1B are modified versions from RWS-210168 (vivo et al., "Motivation for new study item on ultra-low power wake-up signal in Rel-18", 3GPP TSG RAN Rel-18 workshop, electronic meeting, June 28- July 2, 2012).

The assumption is that the low-power wake-up receiver 150 can be operated in an always 'on' manner with very low power consumption. In fact, it is expected that the receiver 150 will consume significantly less power compared to the NR transceiver, by designing a simple (WUS) signal and the use of dedicated hardware for its monitoring, which is only able to receive the WUS.

LP-WUS is currently considered for both IDLE/INACTIVE mode and Connected mode. Current discussions mainly focused on DL (downlink) reception where LP-WUS can be used to wake up the main radio to receive PDCCH/PDSCH (Physical downlink control channel/physical downlink shared channel), e.g., for paging or other data.

In RAN1 discussions have addressed possible LP-WUS content and LP-SS (low power synchronization signal) design following functionalities were considered during the discussion in study item R1-2308414, Nordic Semiconductor ASA, "Summary of discussions on L1 signal design and procedure for low power WUS", 3GPP TSG RAN WG1 #114, Toulouse, France, Aug 21 - Aug 25, 2023. Further information can be found in study item TR, latest (draft) version in RP-231814, "TR 38.869 v1.0.0 Study on low-power wake-up signal and receiver for NR", Rapporteur(vivo), CMCC. See also RAN#108, Rel-19 work item for LP-WUS (RP-234056). Further information can be found in study item TR, latest (draft) version in RP-231814, "TR 38.869 v1.0.0 Study on low-power wake-up signal and receiver for NR" , Rapporteur(vivo), CMCC. In RAN#108, Rel-19 work item for LP-WUS (RP-234056) was agreed upon. It is clear that there is a lot of discussion in this area.

Since the LR is designed to reduce the power, the LP-WUS design predominantly converged to a waveform using on-off keying (OOK) with or without an embedded sequence. OOK is a modulation scheme where there is no data/signal during the transmission of one logic state (e.g., logic zero); instead, the data/signal is transmitted during the transmission of the other logic state (e.g., logic one). To integrate the OOK signal in the OFDM (orthogonal frequency division multiplexing) framework, to minimize impact on the legacy UEs, the OOK scheme follows OFDM symbol structure and generation. Due to the inferior performance of the OOK scheme under low S(I)NR cell-edge cases (e.g., the signal is close to the noise), an additional sequence may be embedded in the ON duration of the OOK signal, thus ensuring coverage of OOK receivers with additional sequence detection capabilities.

Despite limiting the usage of power consuming receiver blocks in the LR, it may not be effective for an LR to monitor LP- WUS continuously all the time, since the energy consumption is proportional to the ON duration. Thus, for an efficient operation, LRs are operated in a duty cycled manner, which turns on at discreet instants to reduce the power consumption.

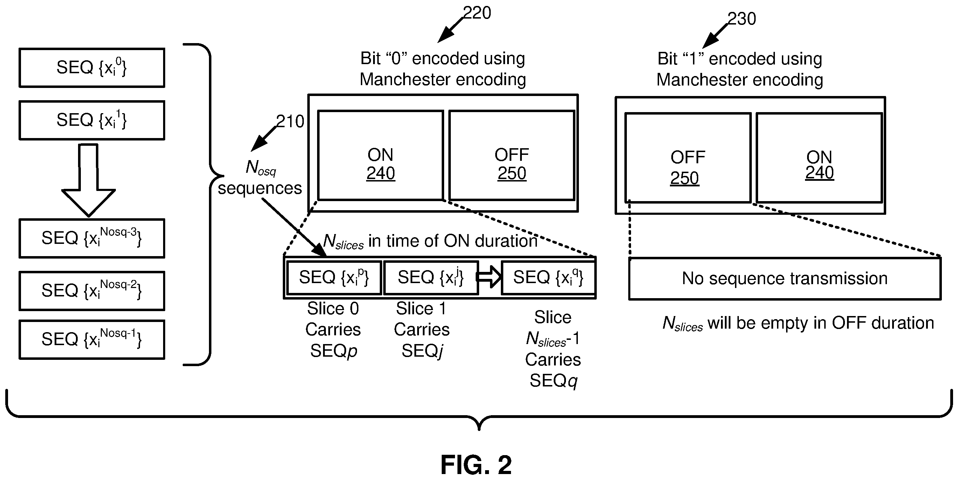

Consider the following. Two variables, namely, $N_{osq}$ and $N_{slice}$, are introduced, where $N_{osq}$ corresponds to the number of overlay sequences with a time slice of ON duration and $N_{slice}$ is the number of time slices made within the ON duration to interpret as separate sequences, i.e., segments within the ON duration. The overlaying is the sequence applied over the ON duration to spread the energy across the entire BW (bandwidth), thus making the signal robust against fading. An overlay sequence can be a sequence that has the length (e.g., samples) corresponding to the ON duration. There are $N_{slice}$ in the ON duration, and each slice has a sequence p, j, ..., q. Each sequence has $N_{osq}$ overlay sequences. Thus, depending on $N_{osq}$ and $N_{slice}$, one can characterize three schemes using FIG. 2, and carrying information over OOK ON durations is described now. FIG. 2 illustrates overlay sequence types (e.g., sequence-based information), and the possibility of multiplexing sequences in the ON duration can be used to convey information bits. The $N_{osq}$ sequences 210 are shown, and these are used on the left side 220, where the bit "0" (zero) is encoded using Manchester encoding so there are $N_{slices}$ in the time of the ON duration 240 but no sequence transmission in the OFF duration 240. On the right side 230, there is a bit "1" encoded using Manchester encoding, where there is no sequence transmission in the OFF duration 250 but there is sequence transmission in the ON duration 240. Having no sequence transmission means $N_{slice}$ will be empty in the OFF duration 250. Manchester encoding is an encoding in which the encoding of each data bit is either low then high, or high then low, for equal time, as is illustrated in FIG. 2. In general, there is a map between the logical ONE and logical ZERO to a bit sequence that are complements to each other. Note that the bit mappings could be reversed if desired, the bit for left side 220 could be bit "1" and the bit for the right side 230 could be bit "0".

The variable M, used extensively in the LP-WUS study item, refers to the number of levels, i.e., ON/OFF, within an equivalent NR CP-OFDM (Cyclic Prefix-Orthogonal Frequency Division Multiplexing) symbol duration, which is $T_{symb}$. Thus M = 2 refers to the two possible levels, i.e., this can pack either {ON, OFF}, {OFF, ON} in case of MC (Manchester) encoding, otherwise, {ON, ON}, {OFF, OFF} as well.

Three options are described below: cell-specific overlay sequences, i.e., $N_{slice}$ = 1 and $N_{osq}$ = 1; multiple sequences in ON duration carrying more bits, i.e., $N_{slice}$ = 1 and $N_{osq}$ > 1; and multiple time slices to carry more information in ON duration, i.e., $N_{slice}$ > 1 and $N_{osq}$ > 1.

Cell-specific overlay sequences, i.e., $N_{slice}$ = 1 and $N_{osq}$ = 1, are described now. In this scheme, the sequence is used only to improve coverage of the LP-WUS detection, i.e., the sequence used in the ON duration is the same on all ON durations of the LP-WUS transmission. Thus, the SD (sequence detection or sequence detector) based receiver can correlate with the same sequence and determine the peaks in every ON duration while evaluating zeros in the OFF duration, as the OFF duration contains only the receiver noise. This causes the SD-based LR to be simple and can be triggered only when the ED mode experiences a coverage issue. This scheme has the following benefits, which are listed below.

1) As the overlay sequence is based on cell-id (cell-identification) or is cell-specific, sequence correlation is simple at LR, i.e., the LR expects a peak at every ON duration of OOK transmission.
2) Since the whole ON duration is used for sequence transmission, depending on the modulation order M of the OOK sequence, the correlation gain and hence the coverage can change. When M = 1, the LP-WUS signal can have the best coverage.
3) This approach is beneficial for dual-mode LRs, where ED is used when the signal conditions are good, but when the signal quality deteriorates, SD mode can be used to improve the coverage.

However, it has some drawbacks. Specifically, since the ON duration carries the overlay sequence, the information transmitted for OOK based receivers are usually long. Thus, using the overlay sequence only in the ON duration may cause the LR to turn to SD to perform correlation for the entire LP-WUS duration, which is instead targeted for ED. This scheme may also increase the power consumption at the SD-type LRs significantly.

Since the ON duration carries the overlay sequence, the information transmitted for OOK based receivers is usually long. Thus, using the overlay sequence only in the ON duration may turn the SD to perform correlation for the entire LP-WUS duration, that is targeted for ED. This increases the power consumption at the SD type LRs significantly.

What is described now concerns multiple sequences in ON duration carrying more bits, i.e., $N_{slice}$ = 1 and $N_{osq}$ > 1. In this second option, where multiple sequences can be allocated to carry more than one bit of information, i.e., using $N_{osq}$ overlay sequences, one can convey $log_2 N_{osq}$ bits, depending on which sequence is used for transmission. The size of the sequence remains the same as that of the OOK ON duration, i.e., $N_{symb}/$ M. The following are the merits of this approach, namely:

1) The number of overlay sequences can be configured based on the number of bits carried in each OOK ON duration.
2) As the OOK modulation order increases, the number of samples within ON duration reduces, thus imposing difficulty in finding a better set of $N_{osq}$ sequences with cross correlation property. That is, even though this improves the data rate, the overlay sequence length will be reduced by the same factor. Thus, the sequence orthogonality will degrade and the number of such orthogonal sequences is limited and also reduced by the same factor.
3) Since multiple bits can be conveyed in each ON duration of LP-WUS, sequence detectors may not be active for the complete LP-WUS transmission. Thus, the SD can receive fewer ON duration of LP-WUS signal to recover the complete message carried by the overall LP-WUS, thereby, reducing the power consumption of SD-based receivers.

Unlike the previous scheme, this has fewer drawbacks, namely the following. As the number of sequences used for correlation increases with the number of bits carried within each ON duration of LP-WUS, the hardware complexity and the processing complexity increases exponentially. Additionally, the SD-based receivers may require buffering if the processing capability does not meet the real-time requirements of sequence detection.

Multiple time slices to carry more information in ON duration, i.e., $N_{slice}$ > 1 and $N_{osq}$ > 1, are now described. This third option discussed in FIG. 2 uses only two sequences, i.e., $N_{osq}$ = 2, to ensure better cross correlation performance. However, additional information bits can be achieved by multiplexing $N_{osq}$ sequences in the time domain, i.e., $N_{slice}$ segments, within each slice duration. This scheme is beneficial only when the underlying M = 1, as the correlation performance is proportional to the length of the sequence. The generation of ON duration is done by concatenating sequences corresponding to the respective bits in time domain and then perform OOK4 style generation. It is worth noting that the length of sequence is scaled by the number of information bits carried in each ON duration, i.e., if $N_s$ is the number of samples in the ON duration of OOK signal, then the sequence length will be $\approx \dfrac{N_s}{N_{slice}}$, i.e., scaled by the number of time segments in each ON duration. Even though this can reduce the active time of an SD-based LR, the performance benefit is significantly limited by the correlation gain, since the correlation gain is proportional to the length of the sequence.

Now that an overview of technical areas has been provided, problems in these areas are described. SD-based receivers will have both I and Q branches and can perform coherent detection, thus these receivers inherently have better performance than the envelope detector. It is agreed in the Rel. 19 WID (working item description) that at least for LP-WUS that the ON duration of OOK signal can carry an overlay sequence and can carry the same information as the incumbent OOK message itself (and applicability of overlay to LP-SS was further discussed during the discussions for the WID). The information transmitted for the OOK based receivers can span over multiple slot(s) due to extremely low rate, which is further exacerbated using Manchester coding, which requires two OFDM symbols of equivalent duration. This dictates that the SD-based receiver also needs to be awake for the whole duration of the LP-WUS message, when the sequence is encoded over the ON durations of the complete LP-WUS message for coverage purposes only. This unnecessarily increases the power consumption of the SD-based receivers. Not to mention that the SD-based receivers will be severely under-utilized if the overlay sequence carries the same bit information as the OOK message in each symbol. As discussed above, the information capacity of ON duration can be increased by using more sequence hypotheses or slicing the ON duration in the time domain. However, these impact the performance and can complicate the sequence detection, i.e., the larger the number of hypotheses, the higher the LR complexity.

One problem therefore is the following: How can one apply higher-order modulation to the sequence-based transmission so that a simple SD-based detector can detect the message?

The examples herein address at least this problem. An overview is now presented. One example of a proposal herein is to modulate an overlay sequence with a symbol $s_i$ from constellation $\mathcal{C}$, i.e., mapping the raw information bits $b_i$ as $\mathcal{C} : \{b_i\} \rightarrow \{s_i\}$ under the mapping $\mathcal{C}$, where $\{b_i\}$ contain the information bits meant for the LP-WUS payload. Thus, each transmitted duration will carry $log_2(|\mathcal{C}|)$ bits of information. The overlaying is the sequence applied over the ON duration to spread the energy across the entire BW (bandwidth), thus making the signal robust against fading. The constellation is multiplied on top of the sequence. The transmitted duration could be defined as ON duration of the OOK modulation, where the incumbent OOK symbol provides $b_i$ = {0,1} as information depending on the MC encoding. One can define an OOK symbol duration as CP-OFDM symbol duration / M, e.g., $(T_{symb}/M)$, without MC encoding and CP-OFDM symbol duration / (2*M), e.g., $(T_{symb}/2M)$, with MC encoding. The constellation C can be considered from the family of phase modulation schemes, e.g., M-PSK (M-ary Phase-Shift Keying).

In scope of LP-WUS, using a phase modulation (based constellation) has a benefit that it does not affect the amplitude of the transmission, which the ED receivers depend on. Further in scope of LP-WUS/SS, as an added benefit, the SD receivers use a fewer number of symbols to decode the complete payload compared to envelope detectors, which rely on an OOK message. Note that the benefit is achieved when the $\log_2 |\mathcal{C}| > 2$.

Turning to FIG. 3, this figure is a flow diagram performed by an access node for using modulation and coding using OOK to form an LP-WUS payload for sequence-based detectors. The access node may be a gNB of a cellular network, as one example. However, as long as there is OOK type of signal and different receivers are possible, these techniques may be used. Thus, the techniques herein are not limited to cellular and can instead be applicable to other wireless systems. As described below, other possibilities exist (for cellular) such as a CU (central unit)/DU (distributed unit) combination. In block 310, the access node modulates an overlay sequence with symbols from a constellation, to map (e.g., raw) information bits to the symbols, for mapping information bits to the symbols. The information bits are at least part of a wake-up signal payload (e.g., for a low power wake up radio). In block 315, the access node overlays the modulated overlay sequence on encoding for on-off keying to form the WUS payload. In block 320, the access node transmits, to a user equipment (e.g., comprising the low power wake up radio), the payload having the wake-up signals. In block 325, the access node communicates (if the wake-up signals indicated the UE should wake up, e.g., an ON signal 140-2 as in FIG. 1) with the UE or does not communicate (if the wake-up signals indicated the UE should not wake up, e.g., an OFF signal 140-1 as in FIG. 1) with the UE, based on the content of the payload.

Referring to FIG. 4, this figure is a flow diagram performed by a user equipment for decoding and using an LP-WUS payload formed using modulation and coding using OOK. In block 410, the UE (e.g., which comprises a low power wake up radio 150) receives (e.g., by the UE's wake-up receiver) a wake-up signal payload having a modulated overlay sequence overlaid on encoding for on-off keying. The modulated overlay sequence is formed from the overlay sequence modulated with symbols from a constellation, for mapping information bits to the symbols, where the information bits are at least part of the wake-up signal payload. The UE (e.g., the UE's wake-up receiver) in block 420 decodes the symbols to determine the information bits. The UE (e.g., the UE's wake-up receiver) in block 425 performs determining, by the UE (e.g., wake-up receiver), at least one result based on the information bits (e.g., waking up or not waking up the main radio, monitoring for paging or not). That is, the UE could not wake up the main radio and go back to sleep/continue sleeping, wake up the main radio for various actions, including monitoring for paging, wake up the main radio but not monitor paging. In one example, based on the information bits, the UE may monitor for paging signal(s) from the access node. The UE 10, in block 430, may additionally communicate or do not communicate with the access node based on the at least one result (e.g., whether or not the main radio is awake, whether monitoring for paging indicates the UE is paged).

Now that an overview has been provided, more details are provided. First, constellation-based information over OOK overlay sequences is described.

In all the schemes discussed above for sequence-carrying information over OOK ON durations, the SD receivers extract the complete LP-WUS payload by using fewer ON symbols from OOK sequence either by trading off the LR complexity with multiple parallel correlators or by trading-off the sequence correlation gain with a shorter sequence. Thus, the existing techniques of transmitting more information bits using sequences have severe drawbacks. On the contrary, one can utilize the processing gain of a single sequence overlaid in the ON duration by modulating with a symbol from a constellation set, where the size of the constellation determines the number of bits carried by the ON duration.

Let $z \in \mathbb{C}^{1 \times N_s}$ be the embedded sequence of length $N_s$ over the transmitted symbol or ON duration of OOK bit sequence, in context of LP-WUS. Let $s_i$ be the symbol from constellation $\mathcal{C} \in \mathbb{C}^{1 \times |\mathcal{C}|}$, which maps $\{b\} \to \{s\}: \mathcal{C}$. The number of different symbols determines the modulation order of the constellation. In this document, this discussion is restricted to M-PSK constellations, as these contains only phase changes without any amplitude changes. Thus, the low energy ED-only LR will not get affected by the modulated overlay sequence. For LP-WUS, depending on the raw information bits carried by the OOK sequence with or without Manchester encoding, a modulating symbol per ON duration is determined by grouping $log_2|\mathcal{C}|$ bits and the corresponding constellation symbol $s_i$ is chosen.

Let $\{b_0, b_1, ... b_L\}$ be the $L$ length sequence of information bits carried by (OOK) symbol. The corresponding modulated symbols $\{s_0, s_1, ..., s_M\}$ are the set of modulated symbols. Since M-ary phase modulation scheme is used, each symbol could contain one bit (e.g., BPSK), two bits (e.g., QPSK), three bits (e.g., 8PSK), or the like. The ON duration symbol modulating the overlay sequence on symbol $\{0, ... , m\}$ is given as the following:

$$x_0 = s_0,$$

$$x_1 = s_0 \times s_1,$$

and

$$x_m = \prod_{i=0}^{m} s_i.$$

As the constellation considered herein is M-PSK, the product of all previous constellation symbols produces a valid constellation point within the same constellation space, i.e., the constellation is a closed set. Furthermore, as described below, this structure for ON duration symbol modulation provides benefits when decoding is performed. Now, the ON duration sequence transmitted at symbol m is given by $\{z\} \times x_m$. If Manchester encoding is used, then the constellation symbol is used over every LP-WUS symbol instant.

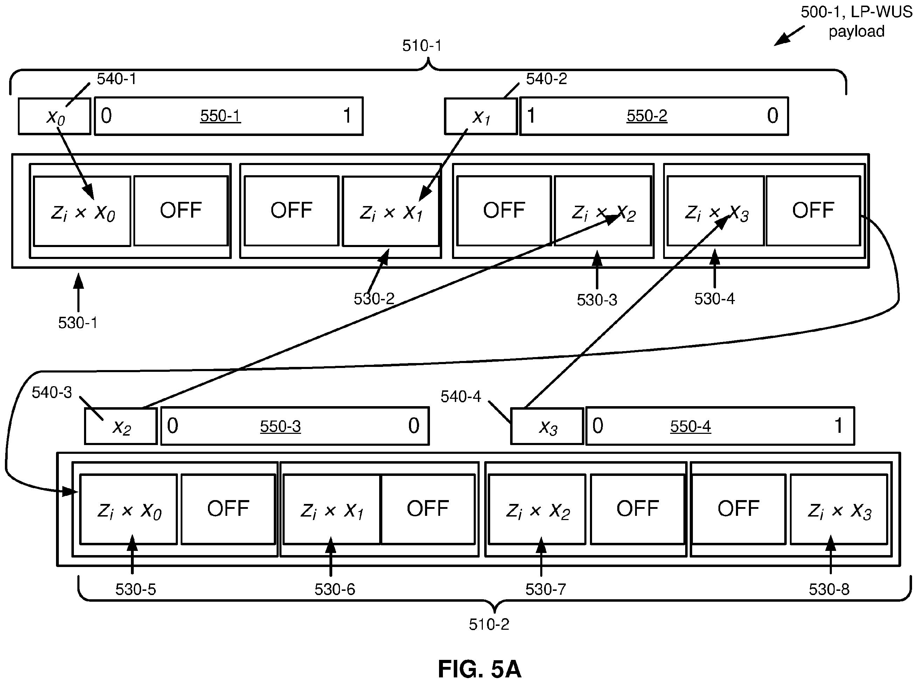

FIG. 5A illustrates a modulated overlay sequence with repetition factor 2, for pilot-free transmission. It is noted that repetition factor 2 here and in other factors may not be used, but using a repetition factor provides the benefit of receiving two sets of the same data. FIG. 5A shows an LP-WUS payload 500 that contains the modulated overlay sequence that has been encoded using MC encoding. This example assumes the Manchester coding scheme of FIG. 2 is being used (e.g., ON duration followed by OFF duration = bit "0"; OFF duration followed by ON duration = bit "1"). The repetition factor of 2 means that the sequence in part 1 510-1 is the same as in part 2 510-2.

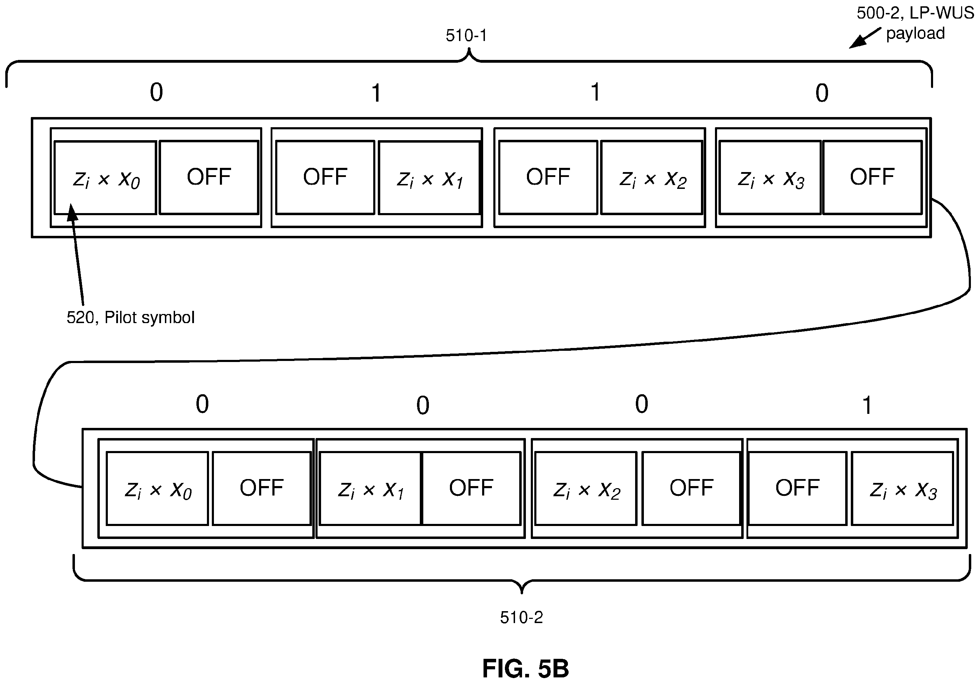

FIG. 5B illustrates a modulated overlay sequence with repetition factor 2, for pilot-assisted transmission. FIG. 5B shows an LP-WUS payload 500 that contains the modulated overlay sequence that has been encoded using MC encoding. This payload 500-2 has a pilot symbol 520 in the first ON duration, which payload 500-1 did not have. While the pilot symbol 520 is only shown in the first ON duration, the pilot symbol 520 could also be implemented in the fifth ON duration.

In these figures, the information bits conveyed via MC encoding for OOK based ED receivers are the following: 01 (bits 550-1); 10 (bits 550-2); 00 (bits 550-3); and 01 (bits 550-4). That is, the MC coding has the bits 540 of 0110 (in part 510-1) then 0001 (in part 510-2). The Manchester encoding of FIG. 2 is used, so that an ON duration followed by an OFF duration is bit "0", and an OFF duration followed by an ON duration is bit "1".

In this example, the encoding for on-off keying encodes a set of bits, and the symbols used to modulate the overlay sequence encode the same set of bits. Consider using QPSK, i.e., $x_i \in \mathbb{C}^4$, to encode the same bits 550 in symbols x 540: symbol $x_0$ 540-1 is used to encode the same bits as MC coded bits 550-1 and is used in ON duration 530-1; symbol $x_1$ 540-2 is used to encode the same bits as MC coded bits 550-2 and is used in ON duration 530-2; symbol $x_2$ 540-3 is used to encode the same bits as MC coded bits 550-3 and is used in ON duration 530-3; and symbol $x_3$ 540-3 is used to encode the same bits as MC coded bits 550-3 and is used in ON duration 530-4. For QPSK, four ON durations of symbols 540 provide the same information as in all of the MC coded bits 550. This example also uses a repetition factor of 2, which means that ON duration 530-5 contains symbol $x_0$ 540-1, ON duration 530-6 contains symbol $x_1$ 540-2, ON duration 530-7 contains symbol $x_2$ 540-3, and ON duration 530-8 contains symbol $x_3$ 540-4. Note that having the same information bits encoded by both the MC coding and the symbols is one example, and it is possible that the symbols could contain different bits than coded in the MC coding. Furthermore, depending on the constellation being used, the symbols may contain more information than the bit encoded by the MC coding, and that extra information can be used for other purposes or ignored, as examples.

Depending on the constellation and payload size, the encoded constellation-based signaling spans fewer OOK symbols compared to underlying OOK-based transmission, but they both may carry the same information. Instead of leaving the remaining ON duration of OOK empty, it is possible to repeat the same information and this repeated information can be used for coverage improvement by SD receivers. The overlay sequence may therefore be modulated with symbols used to improve coverage.

Consider using 8-psk for modulation symbols, i.e., $x_i \in \mathbb{C}^8$. This means the first three symbols 540-1, 540-2, and 540-3 could contain the same bits as the bits 550 in the MC coding (with one extra bit available in the symbol 540-3). The fourth symbol 540-4 could be "blank", contain other information, or begin repeating the set of bits 550 again.

In FIG. 5B, the first ON duration includes a pilot symbol, which can be, e.g., a preamble with known constellation point, such as a $z_0$ (not shown in FIG. 5B). Concerning the pilot symbol, the underlying OOK carries the same information. If for example, QPSK is used, the two bits encoded in the first OOK ON duration can be obtained by two ON durations of the underlying OOK. Thus, the bits used for the first constellation are already known to the SD by using OOK scheme, which can then be used as a mapping for QPSK constellation. Thus, it is possible to know the pilot symbol, which is $x_0$. In more detail, in one option, the pilot symbol can be $z_0$, which can be explicitly present in the first ON duration. Alternatively, if there is no pilot symbol, the $x_0$ symbol is the same embedded in the first $log_2|\mathbb{C}|$ ON duration of the underlying OOK signal, since the information carried by the OOK and the embedded constellation is the same.

Upon transmitting the above OOK sequence with the overlay sequence carrying modulation symbol, SD receivers can perform correlation (using $z_i z_i^*$ or more specifically $\{r_i\} = \{z_i\} \otimes \{z_i^*\}$) and identify the constellation used for transmission. Reference i corresponds to an instant in time, e.g., in each instant i, a constellation $s_i$ is transmitted over the spreading sequence. To analyze that, consider $y_m$ as the received signal with channel fading $h$, which is given as $y_m = h \times \{z_i\} \times s_m$. At each OOK ON duration, perform the receiver side processing at LR to extract the estimate of transmitted symbol as $r_m = \{z_i\}^* \otimes y_i = z_i z_i^* \times s_m \times h \times e^{-j2\pi\Delta FnTs}$, where $T_s$ is the ON duration time instants, $\Delta F$ is the frequency offset assumed at the LR, n is some initial starting point in time sample, and $\otimes$ is convolution. In more detail, $h$ is not known, but when $r_m$ and $r_{m-1}^*$ are determined, due to channel coherency, $h \times h^* \approx |h|^2$ will happen, thus resulting as a scaling factor. As described below with respect to decoding, SD receivers can use only the first three ON durations to determine information used to decode all information transmitted via OOK bits, and an overlay sequence is modulated with symbols used to improve coverage.

In another design, the transmission can be performed by using only the current symbol as the transmitted symbol, i.e., $x_m = s_m$, in that case, the LR can use the first $\log_2|\mathcal{C}|$ underlying OOK symbols (depending on MC encoding) to identify the first symbol and use the first symbol as a pilot symbol (also referred to as a reference signal or demodulation reference signal) to determine the channel h so as to equalize the remaining symbols.

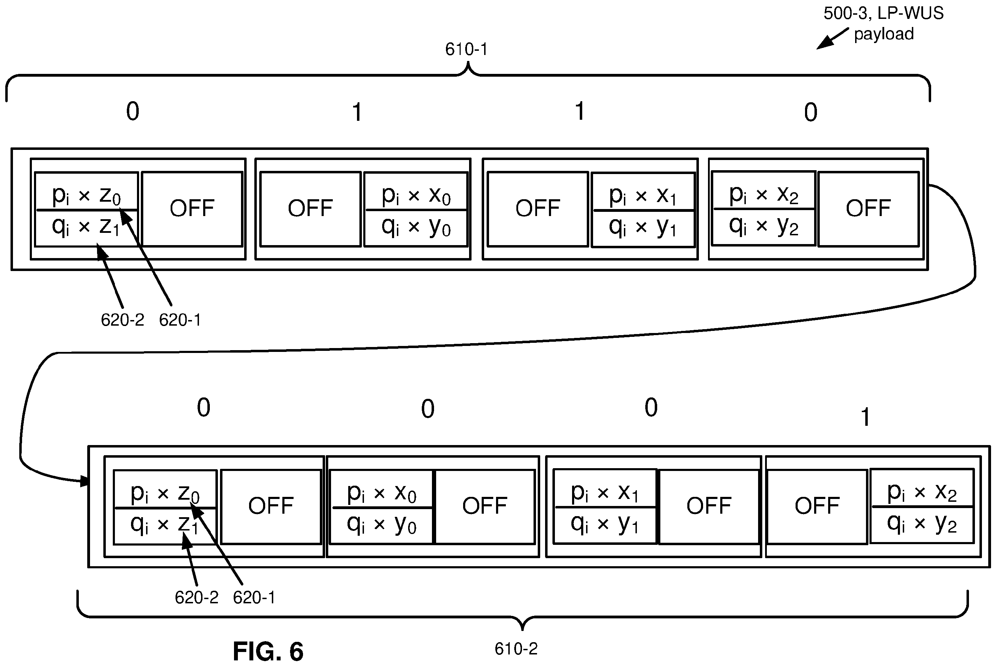

Alternatively, it is possible transmit multiple sequences within the ON duration as in code division multiple access technique, with each code sequence corresponds to a segment in the bit fields. TDM (time-division multiplexing) may also be used, but the processing gain may suffer due to that. It might be better to use CDM to increase the data rate, whilst reducing the constellation carried over each sequence. A code division multiple access technique is illustrated in FIG. 6. FIG. 6 illustrates two sequences in an ON duration to carry more bits. FIG. 6 shows an LP-WUS payload 500-3 that contains the modulated overlay sequence that has been encoded using MC encoding. There are two sequences allocated in each ON duration, where $p_i$ sets the first sequence and $q_i$ sets the second sequence. Thus, $\{x_0, y_0, x_1, y_1, x_2, y_2, x_3, y_3\}$ will be the modulated symbols, each $x_i \in \mathbb{C}^4$ and $y_i \in \mathbb{C}^4$, carrying 4 bits per ON duration. As described previously, SD receivers can use only the first three ON durations to decode all information transmitted via OOK bits, and an overlay sequence is modulated with symbols used to improve coverage. QPSK is used in this example for modulation symbols, i.e., $x_i, y_i \in \mathbb{C}^4$. $z_0$, $z_1$ are known pilot symbols 620-1, 620-2, respectively, used to determine the phase offset. This example also uses a repetition factor of 2, meaning that the sequence in part 1 610-1 is the same as in part 2 610-2, but a repetition factor of 2 is not necessary. Furthermore, it possible that $x_i$ and $y_i$ could use different modulation orders, e.g., $x_i \in \mathbb{C}^4$ and $y_i \in \mathbb{C}^8$, and one or both pilot symbols 620-1, 620-2 might not be used. The choice of having a pilot symbol is optional. If one decides to use a pilot symbol, then the pilot symbol may be only once, i.e., in the first repetition as in FIG. 5B. Optionally, it is possible to repeat the whole set of information again, including the pilot symbol, a second time as in FIG. 6.

The following are observations about using two sequences to carry more bits.

1) Use $N_{osq}$ overlay sequences to convey $\log_2 N_{osq}$ bits as shown in FIG. 6. This scheme, however, suffers with increased complexity, as the number of bits per sequence is increased. Further, the complexity is higher for finding possible set of possible sequences. However, notice that now for an SD-based detector, the detector can find the information using just the first three MC symbols (in part 1 610-1), as the information in first three symbols of the second half (part 2 610-2) is just repeated.

2) Instead of choosing $N_{osq}$ overlay sequences, one can use a well-known constellation like QPSK, 8PSK, or the like, to map a set of bits to a modulation symbol which is then multiplied by a fixed overlaid sequence. Here too, an SD-based detector can just use first three MC symbols in the first part 610-1 to extract all the information as the first three MC symbols in the second part 610-2 just contain the repetition of first three. The following are some benefits of this approach:

a) Sequence design is simpler, as one fixed sequence is used.
b) This is easily scalable by just changing the constellation i.e., by choosing a BPSK constellation, one bit gets encoded; QPSK can encode two bits; 8PSK can encode three bits; and so on. The scaling can be changed based on factors like the receiver's signal condition.

The biggest advantage of this method is that by changing the mapping algorithm, one can easily compensate for the frequency offset that is present at the receiver due to the sub-optimal receiver components.

Example UE implementation is described now. Pilot-free transmission is considered first.

In this case, there is no pilot sequence transmitted to determine the channel between LR and gNB as shown in FIG. 5A. Despite the absence of a pilot symbol, LR with SD can determine the transmitted sequence constellation as follows.

1) The first ON duration is received by the SD-based LR, which uses this as a reference after performing the correlation with the $\{z\}$, i.e., correlation using (at least part of) $z_i z_i^*$, which yields $\hat{x}_0 = \{z\}^{*\circledR} y_0 = s_0 \times h \times e^{-j2\pi\Delta F n Ts}$, where $n$ is some initial starting point in time sample. The $\Delta F$ denotes the frequency offset experienced by LR, as the LR may not have an accurate clock to perform efficient decoding. The variable $T_s$ represents ON duration time instants. In further detail, $\{z_i\}$ corresponds to a vector, i.e., a sequence. After correlation i.e., $$\{r_i\} = \{z_i\} \otimes \{z_i^*\}$$, one may pick (e.g., choose) the index of $k = argmax_i\{|r_i|\}$ having a maximum value, then may pick the sample $r(k)$ and use and determine the phase based on the sample $r(k)$ for further processing. In case of pilot free transmission, two underlying OOK signals may be needed to calculate the constant phase. If we have pilot symbol $z_0$, then we need only the first $log_2|\mathbb{C}|$ OOK ON durations to estimate the constant phase. Additionally, assuming $x_0$ consists of M bits, then one needs $2^M$ ON durations to estimate the value of $x_0$ and further $2^M$ bits to estimate the constant phase.

2) In the second ON duration, LR then decodes information in the second ON duration using the previous estimated symbol as $$\hat{x}_1 = \hat{x}_0^* \times y_1 = s_0^* \times h^* \times e^{+j2\pi\Delta F n Ts} \times s_0 \times s_1 \times h \times e^{-j2\pi\Delta F(n+2)T_s} = (s_0^* s_0) \times (h^* h) \times e^{-j2\pi\Delta F 2 T_s} \times s_1$$. This is due to the effect of frequency offset, i.e., $e^{-j2\pi\Delta F2Ts}$ occurs due to the residual frequency offset present at the receiver. Furthermore, assuming unit energy constellation, LR can decode $$\hat{x}_1 = \hat{x}_0^* \times y_1 = s_1 \times e^{-j2\pi\Delta F2Ts}$$. Furthermore, as described above, $h$ is not known, but when $r_m$ and $r_{m-1}^* (\hat{x}_1$ and $\hat{x}_0$, in this example) are determined, due to channel coherency, $h \times h^* \approx |h|^2$ will happen, thus resulting as a scaling factor. It was previously stated that the structure for ON duration symbol modulation of $$x_m = \prod_{i=0}^{m} s_i$$ provides benefits when decoding is performed. In particular, a benefit is provided because $x_1 = s_0 \times s_1$ in this example results in the ability to perform ($s_0^* s_0$), when determining $\hat{x}_1$, and eliminate one variable for decoding, which would not happen if $x_1 = s_1$.

3) Further on, one determines $$\hat{x}_m = \hat{x}_{m-1}^* \times y_m = s_m \times e^{-j2\pi\Delta F2Ts}$$. Note that the frequency offset becomes a constant phase due to differential detection between subsequent symbols.

4) As the modulated symbol is over the sequence, the correlation gain provides significant boost to the post processing SNR, thus improving the detection capability. Upon receiving the first $2 \times log_2|\mathcal{C}|$ received symbols, the time domain received symbols can act as the pilot for detecting the first two received symbols.

5) Then, after detecting first two received symbols, $\hat{x}_2, ... \hat{x}_M$, received symbols can be decoded as follows, assuming $\{x_0, x_1\}$ are obtained via OOK overlay sequence as the correlation points itself, i.e., $\hat{x}_1 = x_0, \hat{x}_1 = x_1,$ is known and can be used as pilot symbols.

6) Knowing $x_1$ and $\hat{x}_1 = s_1 \times e^{-j2\pi\Delta F Ts},$ the constant phase component, i.e., $e^{-j2\pi\Delta F2Ts},$ can be determined, which can then be used to estimate further received symbols $\hat{x}_2, ... \hat{x}_M$ by compensating this phase depending on the location of ON/OFF via Manchester encoding.

Pilot assisted transmission is described now. Here, it is assumed the presence of a pilot with known symbol before the actual data transmission. This can be a preamble with known constellation point, i.e., pilot symbol, which can then provide the constant phase error $e^{-j2\pi\Delta F2Ts}$. In that case, there is no need to utilize the underlying OOK sequence as pilots as shown in FIG. 5B and described above, as the constant phase error is already known. That is, determination of $\hat{x}_0$ and $\hat{x}_1$ will be more straightforward.

Turning to FIG. 7, this figure shows a block diagram of one possible and non-limiting example of a cellular network 1 that is connected to a user equipment (UE) 10. A number of network elements are shown in the cellular network of FIG. 7: a base station 70; and a core network 90.

In FIG. 7, a user equipment (UE) 10 is in wireless communication via radio link 11 with the base station 70 of the cellular network 1. A UE 10 is a wireless communication device, such as a mobile device, that is configured to access a cellular network. The UE 10 is illustrated with one or more antennas 28. The ellipses 2 indicate there could be multiple UEs 10 in wireless communication via radio links with the base station 70. The UE 10 includes one or more processors 13, one or more memories 15, and other circuitry 16. The other circuitry 16 includes one or more receivers (Rx(s)) 17 and one or more transmitters (Tx(s)) 18. A program 12 is used to cause the UE 10 to perform the operations described herein. For a UE 10, the other circuitry 16 could include circuitry such as for user interface elements (not shown) like a display. The program 12 may be implemented via instructions stored in memory/memories 15 and executed by processor(s) 13, or by hardware such being implemented as part of the processor(s) or other hardware elements, or both.

The base station 70, as a network element of the cellular network 1, provides the UE 10 access to cellular network 1 and to the data network 91 via the core network 90 (e.g., via a user plane function (UPF) of the core network 90). As such, the base station 70 may be considered to be an access node, which provides access by UE(s) 10 to the cellular network 1. The base station 70 is illustrated as having one or more antennas 58. In general, the base station 70 may be referred to as RAN node 70, although many will make reference to this as a gNB (gNode B, a base station for NR, new radio) instead. There are, however, many other examples of RAN nodes including an eNB (evolved Node B) or TRP (Transmission-Reception Point). The base station 70 includes one or more processors 73, one or more memories 75, and other circuitry 76. The other circuitry 76 includes one or more receivers (Rx(s)) 77 and one or more transmitters (Tx(s)) 78. A program 72 is used to cause the base station 70 to perform the operations described herein. The program 72 may be implemented via instructions stored in memory/memories 75 and executed by processor(s) 73, or by hardware such being implemented as part of the processor(s) or other hardware elements, or both.

It is noted that the base station 70 may instead be implemented via other wireless technologies, such as Wi-Fi (a wireless networking protocol that devices use to communicate without direct cable connections). In the case of Wi-Fi, the link 11 could be characterized as a wireless link, the base station 70 may be any access node that allows a UE to connect to a network, and the UE 10 could be characterized as a wireless device. For the technology of Wi-Fi, for instance, the base station 70, as an access node, may be referred to as an access point, and the UE 10 may be referred to as a station, STA. The network 1 is usually referred to as a wireless local (or wide area) network.

Two or more base stations 70 communicate using, e.g., link(s) 79. The link(s) 79 may be wired or wireless or both and may implement, e.g., an Xn interface for 5G (fifth generation), an X2 interface for LTE (Long Term Evolution), or other suitable interface for other standards.

The cellular network 1 may include a core network 90, as a second network element or elements, that may include core network functionality, and which provide connectivity via a link or links 81 with a data network 91, such as a telephone network and/or a data communications network (e.g., the Internet). The core network 90 includes one or more processors 93, one or more memories 95, and other circuitry 96. The other circuitry 96 includes one or more receivers (Rx(s)) 97 and one or more transmitters (Tx(s)) 98. A program 92 is used to cause the core network 90 to perform the operations described herein. The program 92 may be implemented via instructions stored in memory/memories 95 and executed by processor(s) 93, or by hardware such being implemented as part of the processor(s) or other hardware elements, or both.

The core network 90 could be a 5GC (5G core network). The core network 90 can implement or comprise multiple network functions (NF(s)) 99, and the program 92 may comprise one or more of the NFs 99. A 5G core network may use hardware such as memory and processors and a virtualization layer. It could be a single standalone computing system, a distributed computing system, or a cloud computing system. The NFs 99, as network elements, of the core network could be containers or virtual machines running on the hardware of the computing system(s) making up the core network 90.

Core network functionality for 5G may include access and mobility management functionality that is provided by a network function 99 such as an access and mobility management function (AMF), session management functionality that is provided by a network function such as a session management function (SMF). Core network functionality for access and mobility management in an LTE (Long Term Evolution) network may be provided by an MME (Mobility Management Entity) and/or SGW (Serving Gateway) functionality, which routes data to the data network. Many others are possible, as illustrated by the examples in FIG. 7: AMF; SMF; MME; SGW; GMLC (Gateway Mobile Location Center); LMF (Location Management Function); UDM (Unified Data Management)/UDR (Unified Data Repository); NRF (Network Repository Function); and/or E-SMLC (Evolved Serving Mobile Location Center). These are merely exemplary core network functionality that may be provided by the core network 90, and note that both 5G and LTE core network functionality might be provided by the core network 90. The base station 70 is coupled via a backhaul link 31 to the core network 90. The base station 70 and the core network 90 may include an NG (Next Generation) interface for 5G, or an S1 interface for LTE, or other suitable interface for other radio access technologies for communicating via the backhaul link 31.

In the data network 91, there is a computer-readable medium 94. The computer-readable medium 94 contains instructions that, when downloaded and installed into the memories 15, 75, or 95 of the corresponding UE 10, base station 70, and/or core network element(s) 90, and executed by processor(s) 13, 73, or 93, cause the respective device to perform corresponding actions described herein. The computer-readable medium 94 may be implemented in other forms, such as via a compact disc or memory stick.

The programs 12, 72, and 92 contain instructions (as part of a corresponding program 12, 72, and 92) stored by corresponding one or more memories 15, 75, or 95. These instructions, when executed by the corresponding one or more processors 13, 73, or 93, cause the corresponding apparatus 10, 70, or 90, to perform the operations described herein.

The computer readable memories 15, 75, or 95 are circuitry and may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 15, 75, and 95 may be means for performing storage functions. The processors 13, 73, and 93, are circuitry and may be of any type suitable to the local technical environment. For example, these processors may include one or more of general-purpose computers, special purpose computers, microprocessors, digital signal processors (DSPs), processors based on a multi-core processor architecture, and may also include specialized circuits such as field-programmable gate arrays (FPGAs), application specific circuits (ASICs), signal processing devices and other devices, or combinations of these devices, as non-limiting examples. The processors 13, 73, and 93 may be means for causing their respective apparatus to perform functions, such as those described herein. Particularly, for any apparatus having means to perform functions described herein, the means may include at least one processor, and at least one memory storing instructions that, when executed by at least one processor, cause the performance of the apparatus.

The receivers 17, 77, and 97, and the transmitters 18, 78, and 98 may implement wired or wireless interfaces. The receivers and transmitters may be grouped together as transceivers.

The cellular network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities (such as network functions 99) that result from the network virtualization are still implemented, at some level, using hardware such as processors 73 and/or 93 and memories 75 and/or 95, and also such virtualized entities create technical effects.

In general, the various embodiments of the user equipment 10 can include, but are not limited to, cellular telephones (such as smart phones, mobile phones, cellular phones, voice over Internet Protocol (IP) (VoIP) phones, and/or wireless local loop phones), tablets, portable computers, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the UE 10 could be any end device that may be capable of wireless communication. By way of example rather than limitation, the UE may also be referred to as a communication device, terminal device (MT), a Subscriber Station (SS), a Portable Subscriber Station, a Mobile Station (MS), or an Access Terminal (AT).

The following are additional examples.

Example 1. A method, comprising: receiving, by a user equipment, a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining, by the user equipment, a constant phase error corresponding to ON durations of the on-off keying and that separates received symbols in phase; determining, by the user equipment using at least the constant phase error, individual received symbols corresponding to individual ON durations of the on-off keying; determining, by the user equipment, the symbols that were used to modulate the overlay sequence based on the individual received symbols; determining, by the user equipment, the information bits corresponding to the determined symbols; and determining at least one result based on the information bits.

Example 2. The method according to example 1, wherein: determining the constant phase error comprises: performing correlation using the overlay sequence from a first ON duration of the on-off keying to determine a received sequence having a plurality of indexes corresponding to individual samples; choosing an index, from the plurality of indexes, having a maximum value from the received sequence; using a sample corresponding to the index to determine a phase; using at least the phase to determine a first received symbol from the first ON duration; decoding information in a second ON duration of the on-off keying to determine the constant phase error; determining, by the user equipment using at least the constant phase error, the individual received symbols comprises determining, using at least the constant phase error, the individual received symbols for third and subsequent ON durations.

Example 3. The method according to example 2, wherein the first received symbol is $x_0$ having M bits, $2^M$ ON durations are needed to estimate a value of $x_0$ and a further $2^M$ bits are needed to estimate the constant phase.

Example 4. The method according to any of examples 2 or 3 wherein the decoding information in the second ON duration uses a channel $h$ in equations for the first received symbol and a second received symbol in the second ON duration to determine a scaling factor based on $h \times h^* \approx |h|^2$, and the scaling factor is used in the decoding information.

Example 5. The method according to example 1, wherein: a first ON duration of the on-off keying comprises a pilot symbol; and determining the constant phase error comprises determining the constant phase error based on the pilot symbol.

Example 6. The method according to any of examples 1 to 5, wherein the symbols from the constellation comprise first symbols, wherein the wake-up signal payload is received during ON durations of the on-off keying, wherein the second symbols modulating the overlay sequence on symbol $\{0, ... , m\}$ are given as the following: $x_0 = s_0$, $x_1 = s_0 \times s_1, ...,$ $x_m = \prod_{i=0}^{m} s_i$, where $x_0$, $x_1$, ......, and $x_m$ are second symbols and $s_0$, $s_1$, ......, and $s_m$ are first symbols, and an ON duration sequence transmitted at symbol $m$ is given by $\{z\} \times x_m$, where $\{z\}$ is the overlay sequence.

Example 7. The method according to any of examples 1 to 6, wherein an individual modulated overlay sequence is transmitted with a repetition factor of two.

Example 8. The method according to any of examples 1 to 7, wherein the encoding for on-off keying comprises Manchester encoding where a first value of a bit is encoded using an ON duration, comprising part of the modulated overlay sequence, that precedes an OFF duration that is empty, and a second value of the bit is encoded using the OFF duration that is empty and that precedes the ON duration, comprising another part of the modulated overlay sequence.

Example 9. The method according to any of examples 1 to 8, wherein the constellation is from a family of phase modulation schemes.

Example 10. The method according to any of examples 1 to 9, wherein the encoding for on-off keying encodes a set of bits and the symbols used to modulate the overlay sequence encode a same set of bits.

Example 11. An apparatus, comprising means for: receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining a constant phase error corresponding to ON durations of the on-off keying and that separates received symbols in phase; determining, using at least the constant phase error, individual received symbols corresponding to individual ON durations of the on-off keying; determining the symbols that were used to modulate the overlay sequence based on the individual received symbols; determining the information bits corresponding to the determined symbols; and determining at least one result based on the information bits.

Example 12. The apparatus according to example 11, wherein: determining the constant phase error comprises: performing correlation using the overlay sequence from a first ON duration of the on-off keying to determine a received sequence having a plurality of indexes corresponding to individual samples; choosing an index, from the plurality of indexes, having a maximum value from the received sequence; using a sample corresponding to the index to determine a phase; using at least the phase to determine a first received symbol from the first ON duration; decoding information in a second ON duration of the on-off keying to determine the constant phase error; determining, by the user equipment using at least the constant phase error, the individual received symbols comprises determining, using at least the constant phase error, the individual received symbols for third and subsequent ON durations.

Example 13. The apparatus according to example 12, wherein the first received symbol is $x_0$ having M bits, $2^M$ ON durations are needed to estimate a value of $x_0$ and a further $2^M$ bits are needed to estimate the constant phase.

Example 14. The apparatus according to any of examples 12 or 13, wherein the decoding information in the second ON duration uses a channel $h$ in equations for the first received symbol and a second received symbol in the second ON duration to determine a scaling factor based on $h \times h^* \approx |h|^2$, and the scaling factor is used in the decoding information.

Example 15. The apparatus according to example 11, wherein: a first ON duration of the on-off keying comprises a pilot symbol; and determining the constant phase error comprises determining the constant phase error based on the pilot symbol.

Example 16. The apparatus according to any of examples 11 to 15, wherein the symbols from the constellation comprise first symbols, wherein the wake-up signal payload is received during ON durations of the on-off keying, wherein the second symbols modulating the overlay sequence on symbol $\{0, ... , m\}$ are given as the following: $x_0 = s_0$, $x_1 = s_0 \times s_1, ...,$ $x_m = \prod_{i=0}^{m} s_i$, where $x_0$, $x_1$, ......, and $x_m$ are second symbols and $s_0$, $s_1$, ......, and $s_m$ are first symbols, and an ON duration sequence transmitted at symbol $m$ is given by $\{z\} \times x_m$, where $\{z\}$ is the overlay sequence.

Example 17. The apparatus according to any of examples 11 to 16, wherein an individual modulated overlay sequence is transmitted with a repetition factor of two.

Example 18. The apparatus according to any of examples 11 to 17, wherein the encoding for on-off keying comprises Manchester encoding where a first value of a bit is encoded using an ON duration, comprising part of the modulated overlay sequence, that precedes an OFF duration that is empty, and a second value of the bit is encoded using the OFF duration that is empty and that precedes the ON duration, comprising another part of the modulated overlay sequence.

Example 19. The apparatus according to any of examples 11 to 18, wherein the constellation is from a family of phase modulation schemes.

Example 20. The apparatus according to any of examples 11 to 19, wherein the encoding for on-off keying encodes a set of bits and the symbols used to modulate the overlay sequence encode a same set of bits.

Example 21. The apparatus of any preceding apparatus example, wherein the means comprises: at least one processor; and at least one memory storing instructions that, when executed by at least one processor, cause the performance of the apparatus.

Example 22. An apparatus, comprising: one or more processors; and one or more memories storing instructions that, when executed by the one or more processors, cause the apparatus at least to perform: receiving, by a user equipment, a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload; determining, by the user equipment, a constant phase error corresponding to ON durations of the on-off keying and that separates received symbols in phase; determining, by the user equipment using at least the constant phase error, individual received symbols corresponding to individual ON durations of the on-off keying; determining, by the user equipment, the symbols that were used to modulate the overlay sequence based on the individual received symbols; determining, by the user equipment, the information bits corresponding to the determined symbols; and determining at least one result based on the information bits.

Example 23. The apparatus according to example 22, wherein: determining the constant phase error comprises: performing correlation using the overlay sequence from a first ON duration of the on-off keying to determine a received sequence having a plurality of indexes corresponding to individual samples; choosing an index, from the plurality of indexes, having a maximum value from the received sequence; using a sample corresponding to the index to determine a phase; using at least the phase to determine a first received symbol from the first ON duration; decoding information in a second ON duration of the on-off keying to determine the constant phase error; determining, by the user equipment using at least the constant phase error, the individual received symbols comprises determining, using at least the constant phase error, the individual received symbols for third and subsequent ON durations.

Example 24. The apparatus according to example 23, wherein the first received symbol is $x_0$ having M bits, $2^M$ ON durations are needed to estimate a value of $x_0$ and a further $2^M$ bits are needed to estimate the constant phase.

Example 25. The apparatus according to any of examples 23 or 24, wherein the decoding information in the second ON duration uses a channel h in equations for the first received symbol and a second received symbol in the second ON duration to determine a scaling factor based on $h \times h^* \approx |h|^2$, and the scaling factor is used in the decoding information.

Example 26. The apparatus according to example 22, wherein: a first ON duration of the on-off keying comprises a pilot symbol; and determining the constant phase error comprises determining the constant phase error based on the pilot symbol.

Example 27. The apparatus according to any of examples 22 to 26, wherein the symbols from the constellation comprise first symbols, wherein the wake-up signal payload is received during ON durations of the on-off keying, wherein the second symbols modulating the overlay sequence on symbol $\{0, ..., m\}$ are given as the following: $x_0 = s_0$, $x_1 = s_0 \times s_1, ...,$ $x_m = \prod_{i=0}^{m} s_i$ , where $x_0$, $x_1$, ......, and $x_m$ are second symbols and $s_0$, $s_1$, ......, and $s_m$ are first symbols, and an ON duration sequence transmitted at symbol $m$ is given by $\{z\} \times x_m$, where $\{z\}$ is the overlay sequence.

Example 28. The apparatus according to any of examples 22 to 27, wherein an individual modulated overlay sequence is transmitted with a repetition factor of two.

Example 29. The apparatus according to any of examples 22 to 28, wherein the encoding for on-off keying comprises Manchester encoding where a first value of a bit is encoded using an ON duration, comprising part of the modulated overlay sequence, that precedes an OFF duration that is empty, and a second value of the bit is encoded using the OFF duration that is empty and that precedes the ON duration, comprising another part of the modulated overlay sequence.

Example 30. The apparatus according to any of examples 22 to 29, wherein the constellation is from a family of phase modulation schemes.

Example 31. The apparatus according to any of examples 22 to 30, wherein the encoding for on-off keying encodes a set of bits and the symbols used to modulate the overlay sequence encode a same set of bits.

Example 32. A computer program, comprising instructions for performing the methods of any of examples 1 to 10, when the computer program is run on an apparatus.

Example 33. The computer program according to example 32, wherein the computer program is a computer program product comprising a computer-readable medium bearing instructions embodied therein for use with the apparatus.

Example 34. The computer program according to example 32, wherein the computer program is directly loadable into an internal memory of the apparatus.

As used in this application, the term "circuitry" may refer to one or more or all of the following:

(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 7. A computer-readable medium may comprise a computer-readable storage medium (e.g., memories 15, 75, and 95 or other device) that may be any media or means that can contain, store, and/or transport the instructions for use by or in connection with an instruction execution system, apparatus, or device, such as a computer. A computer-readable storage medium does not comprise propagating signals, and therefore may be considered to be non-transitory. The term "non-transitory", as used herein, is a limitation of the medium itself (i.e., tangible, not a signal) as opposed to a limitation on data storage persistency (e.g., RAM, random access memory, versus ROM, read-only memory).

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

**Claims**

1. An apparatus, comprising means for:

   receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload;
   determining a constant phase error corresponding to ON durations of the on-off keying and that separates received symbols in phase;
   determining, using at least the constant phase error, individual received symbols corresponding to individual ON durations of the on-off keying;
   determining the symbols that were used to modulate the overlay sequence based on the individual received symbols;
   determining the information bits corresponding to the determined symbols; and
   determining at least one result based on the information bits.

2. The apparatus according to claim 1, wherein:
determining the constant phase error comprises:

performing correlation using the overlay sequence from a first ON duration of the on-off keying to determine a received sequence having a plurality of indexes corresponding to individual samples;
choosing an index, from the plurality of indexes, having a maximum value from the received sequence;
using a sample corresponding to the index to determine a phase;
using at least the phase to determine a first received symbol from the first ON duration;
decoding information in a second ON duration of the on-off keying to determine the constant phase error;
determining, using at least the constant phase error, the individual received symbols comprises determining, using at least the constant phase error, the individual received symbols for third and subsequent ON durations.

3. The apparatus according to claim 2, wherein the first received symbol is $x_0$ having M bits, $2^M$ ON durations are needed to estimate a value of $x_0$ and a further $2^M$ bits are needed to estimate constant phase.

4. The apparatus according to any of claims 2 or 3, wherein the decoding information in the second ON duration uses a channel h in equations for the first received symbol and a second received symbol in the second ON duration to determine a scaling factor based on $h \times h^* \approx |h|^2$, and the scaling factor is used in the decoding information.

5. The apparatus according to claim 1, wherein:

a first ON duration of the on-off keying comprises a pilot symbol; and
determining the constant phase error comprises determining the constant phase error based on the pilot symbol.

6. The apparatus according to any of claims 1 to 5, wherein the symbols from the constellation comprise first symbols, wherein the wake-up signal payload is received during ON durations of the on-off keying, wherein second symbols modulating the overlay sequence on symbol {0, ... , m} are given as the following:

$$x_0 = s_0,$$

$$x_1 = s_0 \times s_1,$$

. . . .

$$x_m = \prod_{i=0}^{m} s_i,$$

where $x_0$, $x_1$, ......, and $x_m$ are second symbols and $s_0$, $s_1$, ......, and $s_m$ are first symbols, and an ON duration sequence transmitted at symbol m is given by {z} $\times x_m$, where {z} is the overlay sequence.

7. The apparatus according to any of claims 1 to 6, wherein an individual modulated overlay sequence is transmitted with a repetition factor of two.

8. The apparatus according to any of claims 1 to 7, wherein the encoding for on-off keying comprises Manchester encoding where a first value of a bit is encoded using an ON duration, comprising part of the modulated overlay sequence, that precedes an OFF duration that is empty, and a second value of the bit is encoded using the OFF duration that is empty and that precedes the ON duration, comprising another part of the modulated overlay sequence.

9. The apparatus according to any of claims 1 to 8, wherein the constellation is from a family of phase modulation schemes.

10. The apparatus according to any of claims 1 to 9, wherein the encoding for on-off keying encodes a set of bits and the symbols used to modulate the overlay sequence encode a same set of bits.

11. The apparatus of any preceding apparatus claim, wherein the means comprises:

at least one processor; and

at least one memory storing instructions that, when executed by at least one processor, cause the performance of the apparatus.

12. The apparatus of any preceding claim, wherein the apparatus is a user equipment.

13. A method, comprising:

receiving a wake-up signal payload having a modulated overlay sequence overlaid on encoding for on-off keying, where the modulated overlay sequence is formed from the overlay sequence modulated with symbols from a constellation, to map information bits to the symbols, where the information bits are at least part of the wake-up signal payload;

determining a constant phase error corresponding to ON durations of the on-off keying and that separates received symbols in phase;

determining, using at least the constant phase error, individual received symbols corresponding to individual ON durations of the on-off keying;

determining the symbols that were used to modulate the overlay sequence based on the individual received symbols;

determining the information bits corresponding to the determined symbols; and

determining at least one result based on the information bits.

14. A computer program, comprising instructions for performing the method of claim 13, when the computer program is run on an apparatus.

150              140-1

110

OFF or deep sleep

Wake-
up
signal
(OFF)

Main radio
120

125 →

130

Ultra-low Power wake-
up receiver

UE      10

**FIG. 1A**

150              140-2

110

ON

Wake-
up
signal
(ON)

120
Main radio

125 → Trigger

Ultra-low Power wake-
up receiver

130

UE      10

**FIG. 1B**

FIG. 2

Modulate, by an access node, an overlay sequence with symbols from a constellation, for mapping information bits to the symbols, where the information bits are at least part of a wake-up signal payload (e.g., for a low power wake up radio) — 310

Overlay, by the access node, the modulated overlay sequence on encoding for on-off keying to form the wake-up signal payload — 315

Transmit, by the access node to a user equipment (e.g., comprising the low power wake up radio), the WUS payload — 320

Communicate or do not communicate with the user equipment based on the content of the payload — 325

## FIG. 3

Receive, by a UE (e.g., having a wake-up receiver that is part of a low power wake up radio), a wake-up signal payload having a modulated overlay sequence overlaid on encoding for on-off keying, where the modulated overlay sequence is formed from the overlay sequence modulated with symbols from a constellation, for mapping information bits to the symbols, where the information bits are at least part of the wake-up signal payload — 410

Decode, by the UE (e.g., wake-up receiver), the symbols to determine the information bits — 420

Determine, by the UE (e.g., wake-up receiver), at least one result based on the information bits (e.g., waking up or not waking up the main radio, monitoring for paging or not) — 425

Communicate or do not communicate by the user equipment with the access node based on the at least one result (e.g., whether or not the main radio is awake, whether monitoring paging indicates the UE is paged) — 430

## FIG. 4

**FIG. 5A**

EP 4 625 915 A1

510-1

| 0 | 1 | 1 | 0 |
|---|---|---|---|
| $z_i \times x_0$ | OFF | OFF | $z_i \times x_1$ | OFF | $z_i \times x_2$ | $z_i \times x_3$ | OFF |

520, Pilot symbol

| 0 | 0 | 0 | 1 |
|---|---|---|---|
| $z_i \times x_0$ | OFF | $z_i \times x_1$ | OFF | $z_i \times x_2$ | OFF | OFF | $z_i \times x_3$ |

510-2

**FIG. 5B**

EP 4 625 915 A1

610-1

| 0 | 1 | 1 | 0 |

$p_i \times z_0$ / $q_i \times z_1$ | OFF | OFF | $p_i \times x_0$ / $q_i \times y_0$ | OFF | $p_i \times x_1$ / $q_i \times y_1$ | $p_i \times x_2$ / $q_i \times y_2$ | OFF

620-2  620-1

| 0 | 0 | 0 | 1 |

$p_i \times z_0$ / $q_i \times z_1$ | OFF | $p_i \times x_0$ / $q_i \times y_0$ | OFF | $p_i \times x_1$ / $q_i \times y_1$ | OFF | OFF | $p_i \times x_2$ / $q_i \times y_2$

620-2  620-1

**FIG. 6**

610-2

FIG. 7

Europäisches
Patentamt

European
Patent Office

Office européen
des brevets

# EUROPEAN SEARCH REPORT

**Application Number**

EP 25 16 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID BHATOOLAUL ET AL: "LP-WUS and LP-SS design", 3GPP DRAFT; R1-2400962; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568733, Retrieved from the Internet: URL:https://www.3gpp.org/ftp/TSG_RAN/WG1_R L1/TSGR1_116/Docs/R1-2400962.zip R1-2400962.docx [retrieved on 2024-02-19] * paragraph [3.4.3.1.4] * * paragraph [3.4.3] * ----- -/-- | 1-14 | INV. H04L27/02 H04L27/26 H04W52/02 |

| | TECHNICAL FIELDS SEARCHED (IPC) |
|---|---|
| | H04L H04W |

The present search report has been drawn up for all claims

| Place of search | Date of completion of the search | Examiner |
|---|---|---|
| Berlin | 3 July 2025 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .......................................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAI XIAO ET AL: "Discussion on LP-WUS and LP-SS design", 3GPP DRAFT; R1-2400569; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568351, Retrieved from the Internet: URL:https://www.3gpp.org/ftp/TSG_RAN/WG1_RL1/TSGR1_116/Docs/R1-2400569.zip R1-2400569 Discussion on LP-WUS and LP-SS design-final.docx [retrieved on 2024-02-19] * page 4 * * page 8 * | 1,5,11, 13,14 | |

- - - - -

-/--

**TECHNICAL FIELDS
SEARCHED       (IPC)**

The present search report has been drawn up for all claims

| Place of search | Date of completion of the search | Examiner |
|---|---|---|
| Berlin | 3 July 2025 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATRICK MERIAS ET AL: "Summary of discussions on LP-WUS and LP-SS design", 3GPP DRAFT; R1-2401665; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 27 February 2024 (2024-02-27), XP052577487, Retrieved from the Internet: URL:https://www.3gpp.org/ftp/TSG_RAN/WG1_RL1/TSGR1_116/Docs/R1-2401665.zip R1-2401665.docx [retrieved on 2024-02-27] * page 6 - page 7 * | 7 | |
| | ----- | | |
| A | SUKCHEL YANG ET AL: "Discussion on LP-WUS and LP-SS design", 3GPP DRAFT; R1-2401335; TYPE DISCUSSION; NR_LPWUS-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052569104, Retrieved from the Internet: URL:https://www.3gpp.org/ftp/TSG_RAN/WG1_RL1/TSGR1_116/Docs/R1-2401335.zip R1-2401335_Discussion on LP-WUS and LP-SS design.docx [retrieved on 2024-02-19] * paragraph [02.2] * | 10 | **TECHNICAL FIELDS SEARCHED** (IPC) |
| | ----- | | |

The present search report has been drawn up for all claims

| Place of search | Date of completion of the search | Examiner |
|---|---|---|
| Berlin | 3 July 2025 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VIVO**. New SID: Study on low-power Wake-up Signal and Receiver for NR. *3GPP (third generation partnership project) TSG (Technical service group) RAN (Radio access network) meeting #94e, Electronic Meeting*
- **VIVO et al.** Motivation for new study item on ultra-low power wake-up signal in Rel-18. *3GPP TSG RAN Rel-18 workshop, electronic meeting*, 28 June 2012

- **NORDIC SEMICONDUCTOR ASA**. Summary of discussions on L1 signal design and procedure for low power WUS. *3GPP TSG RAN WG1 #114, Toulouse, France*, 21 August 2023
- Study on low-power wake-up signal and receiver for NR. *TR 38.869*